# EUROPEAN PATENT APPLICATION

(11) **EP 2 154 214 A2**
(43) Date of publication of application: **17.02.2010**
(21) Application number: 09167423.4
(22) Date of filing: 07.08.2009
(51) Int. Cl.: C09J 4/00

(54) **Cyanoacrylate-based adhesive composition**

(30) Priority: 07.08.2008 JP 2008204737
(71) Applicant: Threebond Co., Ltd., Hachioji-shi, Tokyo 193-0941 (JP)
(72) Inventor: Kojima, Kazuhiro, 95310, Saint Ouen L'Aumone (FR); Elgrabli, Sophie, 95310, Saint Ouen L'Aumone (FR); Motoki, Shigekazu, Hachioji-shi Tokyo 193-0941 (JP)
(74) Representative: Grünecker, Kinkeldey, Stockmair & Schwanhäusser Anwaltssozietät

(57) **Abstract**

The present invention relates to a cyanoacrylate-based adhesive composition containing (A) an α-cyanoacrylate, (B) a (meth)acryloyl group-containing multifunctional compound and (C) cumene hydroperoxide in which a content of cumene (1-methyl-1-ethylbenzene) is less than 5 wt%. According to the invention, there can be provided an α-cyanoacrylate-based adhesive composition having excellent wet heat resistance, also having excellent chemical resistance and further having a high decreasing rate from initial value, namely an excellent retention rate of wet heat resistance, in a wide range of applications such as adhesion of synthetic rubbers or elastomers such as SEBS, EPDM and chloroprene rubber, and adhesion of heterogeneous materials of iron/synthetic rubbers or elastomers, to say nothing of adhesion of iron/iron.

## Description

### [Technical Field]

The present invention relates to an α-cyanoacrylate-based adhesive used for instant adhesion for a wide range of applications such as metals, rubbers and plastics, and particularly to a cyanoacrylate-based adhesive composition excellent in wet heat resistance under conditions of high temperature and humidity and in chemical resistance.

### [Background Art]

An α-cyanoacrylate-based adhesive is rapidly anionically polymerized and cured with a slight amount of moisture adsorbed on surfaces of adherends to allow the adherends to be extremely strongly adhered to each other in a short period of time, so that it has been widely utilized for adhesion of metals, plastics, rubbers and the like, as a instant adhesive of a one-component roomtemperature curing type.

The α-cyanoacrylate-based adhesive is generally poor in moisture resistance and water resistance, and has had the drawback of being difficult to use particularly for water-related applications. The reasons for that include a significant influence on an adhesive interface under high wet heat, because a cured material itself of the α-cyanoacrylate-based adhesive decomposes with water, an alkaline solvent or the like, or cure strain is liable to occur at the time of adhesion due to poor flexibility of the cured material, which causes a poor relaxing action to external stress or internal stress. However, it is hard to throw away the merits of rapid curing capability with moisture at room temperature with one component constitution, so that an α-cyanoacrylate-based adhesive having good productivity and showing excellent moisture resistance and water resistance has been desired.

As techniques for relaxing internal stress which occurs at the time of adhesion, or external stress applied from the outside after adhesion, there have been reported one in which a saturated copolyester is incorporated for the purpose of imparting flexibility (JP-A-63-284279), one in which an acrylonitrile-butadiene copolymer is incorporated (JP-A-7-53924) and the like. However, in these systems, the flexibility imparting agent is present only in a dispersed state in a cyanoacrylate cured material, and does not prevent deterioration of the cyanoacrylate cured material itself. It is therefore hard to say that satisfactory wet heat resistance is possessed under circumstances of high temperature and humidity.

Further, aside from these, there have been reported techniques of improving wet heat resistance of a cured material itself by incorporating a specific acrylic monomer into an α-cyanoacrylate-based adhesive. First, JP-A-58-185666 has reported an α-cyanoacrylate-based adhesive to which a C1-C4 alkyl or alkoxy (meth)acrylate has been added. However, even this has not showed sufficient wet heat resistance. Thereafter, it has been reported to add a trifunctional or more functional acrylate containing a pentaerythritol residue in JP-A-6-145605 and JP-A-145606. In these inventions, wet heat resistance adhesion to EPDM and chloroprene rubber has been reported. However, all are the results of an accelerated test for a relatively short time of 72 hours at 70°C and 95%, and it is somewhat open to question whether sufficient wet heat resistance is possessed under high wet heat and for water-related applications or not. Furthermore, the trifunctional or more functional acrylate carried out in these inventions is only a trifunctional or hexafunctional acrylate.

Additionally, WO 2006/098438 discloses an α-cyanoacrylate-based adhesive which shows an excellent wet heat resistance by adding specific (meth)acrylate to α-cyanoacrylate. However, in view of a decreasing rate from initial value, namely a retention rate of wet heat resistance, the wet heat resistance thereof was not necessarily sufficient.

[Patent Document 1] JP-A-63-284279
[Patent Document 2] JP-A-7-53924
[Patent Document 3] JP-A-58-185666
[Patent Document 4] JP-A-6-145605
[Patent Document 5] JP-A-6-145606
[Patent Document 6] WO 2006/098438

### [Disclosure of the Invention]

### [Problems That the Invention Is to Solve]

An object of the invention is to provide an α-cyanoacrylate-based adhesive composition having excellent wet heat resistance, also having excellent chemical resistance and further having a high decreasing rate from initial value, namely an excellent retention rate of wet heat resistance, in a wide range of applications such as adhesion of synthetic rubbers or elastomers such as SEBS, EPDM and chloroprene rubber, and adhesion of heterogeneous materials of iron/synthetic rubbers or elastomers, to say nothing of adhesion of iron/iron.

### [Means for Solving the Problems]

In order to solve the above-mentioned problems, intensive studies have been made. As a result, it has been found that an α-cyanoacrylate-based adhesive composition in which a specific (meth)acrylate and a peroxide are contained in an α-cyanoacrylate shows excellent wet heat resistance, thus completing the invention. Incidentally, wet heat resistance of the invention means good deterioration resistance under conditions of high temperature and high humidity.

That is, in the invention, the above-mentioned problems have been solved by a cyanoacrylate-based adhesive composition containing (A) an α-cyanoacrylate, (B) a multifunctional (meth)acrylate and (C) cumene hydroperoxide in which the content of cumene (1-methyl-1-ethylbenzene) is less than 5 wt%, as essential components.

As a preferred embodiment, the invention provides a composition in which the above-mentioned component (B) is (B1) trimethylolpropane tri(meth)acrylate, that is, a cyanoacrylate-based adhesive composition containing
(A) an α-cyanoacrylate,
(B1) trimethylolpropane tri(meth)acrylate, and
(C) cumene hydroperoxide in which the content of cumene (1-methyl-1-ethylbenzene) is less than 5 wt%.
   The composition of this embodiment is preferred because it shows extremely excellent wet heat resistance.

### [Advantages of the Invention]

The cyanoacrylate-based adhesive composition according to the invention shows excellent wet heat resistance and has appropriate flexibility, and further, has sufficient resistance also to an acidic atmosphere, a basic atmosphere, boiling water, gasoline and the like. This widens the application range to water-related applications, applications under circumstances of high humidity or the use under special circumstances which has been difficult to be realized by conventional instant adhesives, thereby industrially making a substantial contribution to process reduction, cost cutting and the like.

### [Best Mode for Carrying Out the Invention]

The invention is described in detail below. As the kind of α-cyanoacrylate (component (A)), an α-cyanoacrylate which has hitherto been known is usable. Specific examples thereof include alkyl and cycloalkyl α-cyanoacrylates such as methyl α-cyanoacrylate, ethyl α-cyanoacrylate, propyl α-cyanoacrylate, butyl α-cyanoacrylate and cyclohexyl α-cyanoacrylate, alkenyl and cycloalkenyl α-cyanoacrylates such as allyl α-cyanoacrylate, methallyl α-cyanoacrylate and cyclohexenyl α-cyanoacrylate, alkynyl α-cyanoacrylates such as propangyl α-cyanoacrylates, aryl α-cyanoacrylates such as phenyl α-cyanoacrylate and toluyl α-cyanoacrylate, hetero atom-containing methoxyethyl α-cyanoacrylate, ethoxyethyl α-cyanoacrylate and furfuryl α-cyanoacrylate, silicon-containing trimethylsilylmethyl α-cyanoacrylate, trimethylsilylethyl α-cyanoacrylate, trimethylsilylpropyl α-cyanoacrylate and dimethylvinylsilylmethyl α-cyanoacrylate. Of these, ethyl α-cyanoacrylate is most preferred for reason of performance and cost.

For the (meth)acrylate component (component (B)) used in the invention, its effect is recognized, as long as it has two or more (meth)acryloyl groups in its molecule. Further, in order to more characterize the invention, a multifunctional compound having three or more (meth)acryloyl groups in its molecule is effective. Specific examples of the trifunctional (meth)acrylate compounds include trimethylolpropane tri(meth)acrylate, ethoxylated trimethylolpropane tri(meth)acrylate, propoxylated trimethylolpropane tri(meth)acrylate, pentaerythritol tri(meth)acrylate and ethoxylated isocyanuric acid tri(meth)acrylate. Specific examples of the tetrafunctional (meth)acrylate compounds include ditrimethylolpropane tetra(meth)acrylate, pentaerythritol tetra(meth)acrylate, ethoxylated pentaerythritol tetra(meth)acrylate, and propoxylated pentaerythritol tetra(meth)acrylate. Specific examples of the pentafunctional or more functional (meth)acrylate compounds include pentaerythritol hexa(meth)acrylate, dipentaerythritol hexa(meth)acrylate, dipentaerythritol monohydroxy hexa(meth)acrylate and caprolactone-modified dipentaerythritol hexa(meth)acrylate. Besides, there can be used a urethane (meth)acrylate and an epoxy (meth)acrylate which have three or more (meth)acryloyl groups in their molecule. Of these, in particular, (B1) trimethylolpropane tri(meth)acrylate is preferably used for the purpose of increasing wet resistance.

It is suitable that the amount of the above-mentioned component (B) incorporated accounts for 1 to 50% by weight based on the total amount (100% by weight) of the component (A) and the component (B), and the amount thereof is preferably from 5 to 40% by weight, and more preferably from 10 to 30% by weight. When the amount of the component (B) added is less than 1% by weight, good wet heat resistance tends not to be expressed, whereas amounts exceeding 50% by weight tend to result in poor curing and a decrease in strength.

A component (C) used in the invention is cumene hydroperoxide in which the content of cumene (1-methyl-1-ethylbenzene) is less than 5 wt%. The cumene (1-methyl-1-ethylbenzene) is the residual cumene from the production of cumene hydroperoxide. Industrially available raw materials as an organic peroxide usually contain the residual cumene. However, it is necessary that the content of the residual cumene is less than 5 wt% in the present invention. When the cumene remnant is larger than 5 wt%, the wet heat resistance supposedly caused by the reduction in the degree of polymerization is deteriorated, and the adhesive property after wet resistance testing is significantly reduced. Therefore, the lower the total content of the remaining cumene is, the more excellent the wet resistance is.

Specific examples of the component (C) include cumene hydroperoxide (manufactured by AKZONOBEL: TRIGONOX K-90).

It is suitable that the amount of the above-mentioned component (C) incorporated is 0.01 to 10 parts by weight, preferably 0.05 to 5 parts by weight, and more preferably 0.5 to 2.0 parts by weight per 100 parts by weight of the total amount of the component (A) and the component (B). When the amount of the component (C) added is less than 0.01 part by weight, curability tends to deteriorate. On the other hand, amounts exceeding 10 parts by weight tend to result in deterioration of storage stability.

Moreover, one or a plurality of components among the following components may be further added to the composition of the invention, as long as the effect of the invention is not impaired.
(1) An anionic polymerization inhibitor;
(2) A radical polymerization inhibitor;
(3) An aromatic electronic ligand-containing metallocene compound of a transition metal of the group VIII in the periodic table;
(4) An intramolecular cleaving type photoradical initiator;
(5) A thickening agent;
(6) Specific additives such as a curing accelerator, a toughener and a thermal stabilizer; and
(7) A perfume, a dye, a pigment and the like.

(1) The anionic polymerization inhibitor is added in order to increase storage stability of the composition. Examples of the known inhibitors include sulfur dioxide, sulfur trioxide, nitrogen oxide, methansulfonic acid, boron fluoride, hydrogen fluoride, p-toluenesulfonic acid and the like.

(2) Examples of the radical polymerization inhibitors include quinone, hydroquinone, t-butylcatechol and p-methoxyphenol.

(3) Specific examples of the aromatic electronic ligand-containing metallocene compounds of transition metals of the group VIII in the periodic table include metallocene compounds comprising a transition metal of the group VIII in the periodic table, including ferrocene in which the transition metal is iron, osmocene in which it is osmium, ruthenocene in which it is ruthenium, cobalocene in which it is cobalt and nickelocene in which it is nickel. Of these, ferrocene and derivatives thereof are preferred. Further, aromatic electronic ligand-containing metallocene compounds of transition metals of the group VIII in the periodic table which are described in JP-A-2003-277422 can be used. Of these, preferred compounds are ferrocene, ethylferrocene, n-butylferrocene, benzoylferrocene, acetylferrocene, t-amylferrocene, 1,1'-dimethylferrocene, 1,1'-di-n-butylferrocene, 1,1'-dibenzoylferrocene, 1,1'-di(acetylcyclopentadienyl)iron, bis(pentamethylcyclopentadienyl)iron, bis(cyclopentadienyl)osmium, bis(pentamethylcyclopentadienyl)osmium, bis(cyclopentadienyl)ruthenium and bis(pentamethylcyclopentadienyl)ruthenium. Of these, more preferred are ferrocene, ethylferrocene, n-butylferrocene and benzoylferrocene.

(4) Specific examples of the intramolecular cleaving type photoradical initiators include photoinitiators of the following (a) to (e), and they can be used either alone or as a mixture of several kinds of them.
(a) Acetophenone-based photoinitiators include 4-phenoxydichloroacetophenone, 4-t-butyldichloroacetophenone, 4-t-butyltrichloroacetophenone, diethoxyacetophenone, 2-hydroxy-2-methyl-1-phenylpropan-1-one, 1-(4-isopropylphenyl)-2-hydroxy-2-methylpropan-1-one, 1-(4-dodecylphenyl)-2-hydroxy-2-methylpropan-1-one, 4-(2-hydroxyethoxy)phenyl (2-hydroxy-2-propyl) ketone, 1-hydroxycyclohexyl phenyl ketone, and 2-methyl-1-(4-(methylthio)phenyl)-2-morpholinopropane-1-one and 2-benzyl-2-dimethylamino-1-(4-morpholinophenyl)-butanone-1,2,2-dimethoxy-2-phenylacetophenone.
(b) Examples of benzoin-based photoinitiators include benzoin, benzoin methyl ether, benzoin ethyl ether, benzoin isopropyl ether, benzoin isobutyl ether and benzoin methyl ketal.
(c) Acylphosphine oxide-based photoinitiators include methylisobutyloyl-methylphosphinate, methylisobutyloyl-phenylphosphinate, 2,4,6-trimethylbenzoylphenylethoxyphosphine oxide and 2,4,6-trimethylbenzoyldiphenylphosphine oxide.
(d) Bisacylphosphine oxide-based photoinitiators include bis(2,4,6-trimethylbenzoyl)phenylphosphine oxide and bis(2,6-dimethoxybenzoyl)-2,4,4-trimethylpentylphosphine oxide.
(e) Other photoinitiators include bis(η5-2,4-cyclopentadiene-1-yl)-bis(2,6-difluoro-3-(1H-pyrrole-1-yl)-phenyl)titanium, α-acyloxime ester, methyl phenyl glyoxylate, 3,3',4,4'-tetra(t-butylperoxycarbonyl)benzophenone and 2,2'-azobis(2-methylbutylonitrile).
   Of these, more preferred are 2,4,6-trimethylbenzoylphenylethoxyphosphine oxide, 2,4,6-trimethylbenzoyldiphenylphosphine oxide, bis(2,4,6-trimethylbenzoyl)phenylphosphine oxide and bis(2,6-dimethoxybenzoyl)-2,4,4-trimethylpentylphosphine oxide. 2,4,6-Trimethylbenzoylphenylethoxyphosphine oxide and 2,4,6-trimethylbenzoyldiphenylphosphine oxide are commercially available from BASF as "Lucirin TPO" and "Lucirin TPO-L", respectively. Bis(2,4,6-trimethylbenzoyl)phenylphosphine oxide and bis(2,6-dimethoxybenzoyl)-2,4,4-trimethylpentylphosphine oxide are commercially available from Ciba Specialty Chemicals as "Irgacure 819" and "Irgacure 1700", respectively.
   Irgacure 1700 is a 75:25 mixture of 2-hydroxy-2-methyl-1-phenyl-1-one and bis(2,6-dimethoxybenzoyl)-2,4,4-trimethylpentylphosphine oxide.

(5) The thickening agent is added in order to increase the viscosity of the composition. Examples of the thickening agents include poly(methyl) methacrylate, a methacrylate type copolymer, an acrylic rubber, a cellulose derivative, polyvinyl acetate and poly(α-cyanoacrylate). Above all, the use of poly(methyl) methacrylate having a molecular weight of 100,000 to 400,000 (g/mol) is more preferred, because it is possible to increase the viscosity with less stringiness.

Further, many ordinary polymer additives are also added for toughening. Examples thereof include fillers such as an acrylic elastomer (rubber), an acrylonitrile copolymer elastomer (rubber), a fluoroelastomer and a fine silica filler as described in JP-B-4-75268. Further, for the fine silica filler, it is also possible to improve resin strength without excessively increase the viscosity by using component (B), the multifunctional (meth)acrylate, in which the silica filler of a nano level has been previously dispersed. Above all, the use of an acrylic rubber is more preferred, because impact resistance and peeling resistance are improved.

(6) Examples of the curing accelerators include a polyethylene glycol derivative, a crown ether and a derivative thereof, a calixarene derivative and a thiacalixarene derivative.

For the amount of the above-mentioned various additives added, what is necessary is just to be added in such an amount that the effect of the invention is not impaired. For example, the thickening agents such as poly(methyl) methacrylate and the methacrylate type copolymer, the elastomers such as the acrylic elastomer (rubber) and the acrylonitrile copolymer elastomer (rubber) and the fillers such as the fine silica filler which are described above can be added in relatively large amounts within the range of 1 to 50 parts by weight per 100 parts by weight of the total amount of the component (A) and the component (B). On the other hand, the curing accelerators and the like effectively act by the addition of a very slight amount thereof in some cases.

Further, when nonpolar or highly crystalline plastics such as polyethylene, polypropylene, polyfluoroethylene and polyacetal which are known as materials difficult to adhere, and furthermore, rubbers such as plasticized polyvinyl chloride, silicone rubber, EPDM and SEBS which are nonpolar or in which plasticizers are incorporated in large amounts are adhered, adhesiveness can be significantly improved by using a mediating material for an adhesive interface, which is called a primer. This is also the same in the adhesive composition of the invention. As general primer components, there have been known an aluminum alcoholate and an aluminum chelate salt, a pyridine-based compound, lutidine, a tertiary amine, a phosphine and a phosphite-based compound, an aldehyde-aniline-based compound, an amidine compound, an imidazole derivative, combined use of an organic nitrogen-containing compound and an inorganic basic compound, and the like. These compounds are used in such a manner that they are dissolved or dispersed in solvents or the like, and previously applied on a surface of one or both of adherends to form a primer layer. Further, in order to accelerate radical polymerization, a peroxide may be added to the above-mentioned primer to use.

In the preferred embodiment of the invention, the component (B) constituting the above-mentioned cyanoacrylate-based adhesive composition is trimethylolpropane tri(meth)acrylate (B1) having three acryloyl groups and methacryloyl groups in its molecule. Above all, trimethylolpropane triacrylate is most preferred.

Similarly to the amount of the above-mentioned component (B) incorporated, it is suitable that the amount of the component (B1) incorporated accounts for 1 to 50% by weight based on the total amount (100% by weight) of the component (A) and the component (B1), and the amount thereof is preferably from 5 to 40% by weight, and more preferably from 10 to 30% by weight.

The cyanoacrylate-based adhesive composition according to the invention is preferred, because it shows excellent wet heat resistance, compared to the case in which another compound is used as component (B).

### [Examples]

The present invention will be illustrated in greater detail with reference to the following examples and comparative examples, but the invention should not be construed as being limited by these examples.

Examples 1 to 7 and Comparative Examples 1 to 5
α -Cyanoacrylate-based adhesive compositions were each prepared at blending ratios shown in Table 1 (Examples 1 to 7 and Comparative Examples 1 to 5). Then, characteristics of the respective compositions were evaluated by using test methods shown below. The results thereof are shown in Table 1. Further, various abbreviations denote the followings. "ECA" is ethyl (-cyanoacrylate. "A-TMPT" is trimethylolpropane triacrylate (manufactured by Shin-Nakamura Chemical Co., Ltd.: NK Ester A-TMPT). "AD-TMP" is ditrimethylolpropane tetraacrylate (manufactured by Shin-Nakamura Chemical Co., Ltd.: NK Ester AD-TMP). "A-DPH" is dipentaerythritol hexaacrylate (manufactured by Shin-Nakamura Chemical Co., Ltd.: NK Ester A-DPH). "K-90" is cumene hydroperoxide in which the content of cumene (1-methyl-1-ethylbenzene) is 1.5 wt% (manufactured by AKZONOBEL: TRIGONOX K-90). "K-80" is cumene hydroperoxide in which the content of cumene (1-methyl-1-ethylbenzene) is 10 wt% (manufactured by AKZONOBEL: TRIGONOX K-80). Incidentally, the amounts incorporated described in the recipe of Table 1 are all "part by weight."

A tensile shearing adhesion strength test of SUS304 (stainless steel)/SUS304 was conducted in accordance with JIS K-6861. As a test piece, SUS304 of 100×25×1.6 mm was used. After a portion (10×25 mm) to be adhered was ground with sandpaper of #240, it was washed, and the test pieces were adhered using the adhesive prepared in each of Examples 1 to 7 and Comparative Examples 1 to 5, and fixed with a clip, followed by allowing to stand for 72 hours under circumstances of 23±2°C and 55±5%RH to perform adhesion. The adhesion strength at this time was taken as "initial". Further, this adhesion test piece was aged for 500 hours and 1,000 hours at 80°C and 95%RH, and then, allowed to stand for 24 hours under circumstances of 23±2°C and 55±5%RH. Thereafter, the tensile shearing adhesion strength was measured. The results thereof are values described in columns of "500h after wet resistance test" and "1,000h after wet resistance test". The tensile speed is 10 mm per minute.

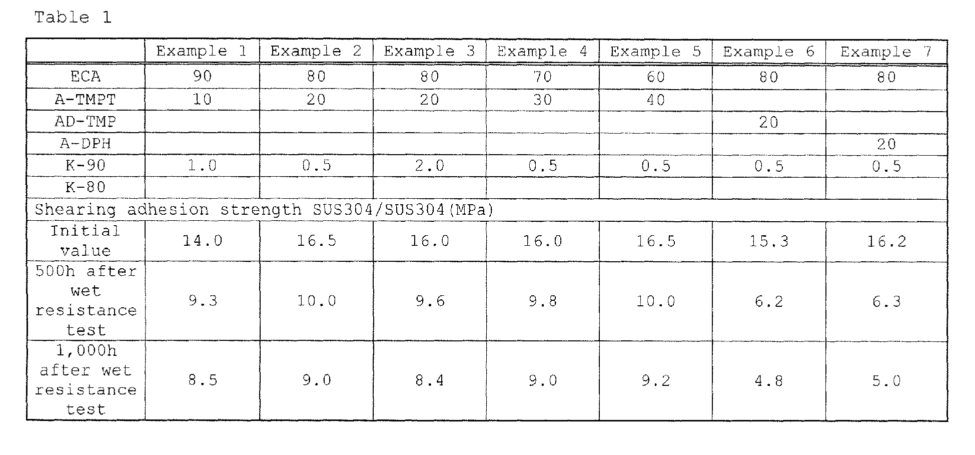

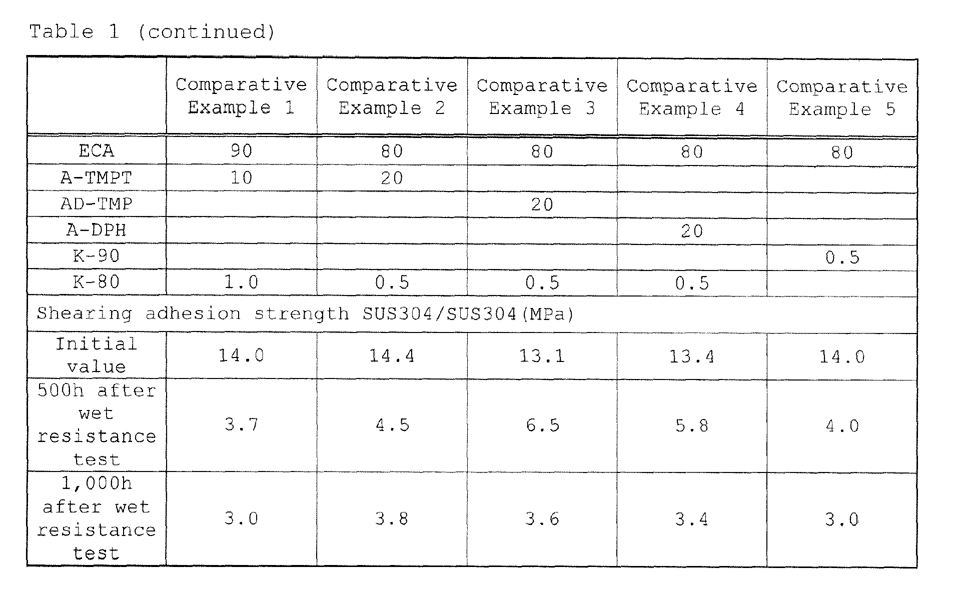

From Examples 1 to 7, good wet heat resistance has been shown, even when exposed to the severe conditions of 80°C, 95%RH, and 500 hours. From Examples 1 to 5, when using trimethylolpropane tri(meth)acrylate as component (B), excellent wet heat resistance has been shown, even under the conditions of 80°C, 95%RH, and 1,000 hours. On the other hand, in the case of using the cumene hydroperoxide in which the content of cumene (1-methyl-1-ethylbenzene) is 5 wt% or more in Comparative Examples 1 to 5, wet heat resistance was reduced as time elapsed. In Comparative Example 5, it has been shown that, even in the case of using the cumene hydroperoxide in which the content of the cumene (1-methyl-1-ethylbenzene) was less than 5 wt%, since the component (B) is not present, wet heat resistance is poor.

Examples 8 to 12 and Comparative Examples 6 to 11
α -Cyanoacrylate-based adhesive compositions were each prepared at blending ratios shown in Table 2 (Examples 8 to 12 and Comparative Examples 6 to 11). Then, characteristics of the respective compositions were evaluated by using test methods shown below. The results thereof are shown in Table 2.

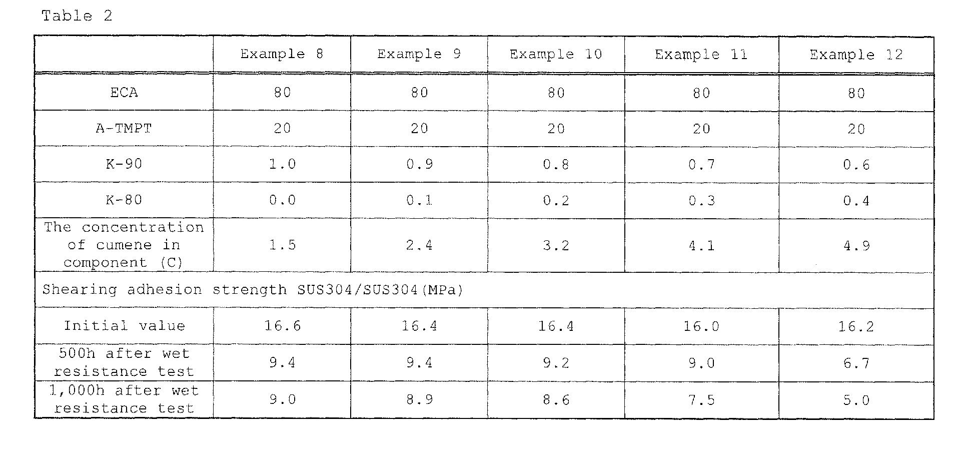

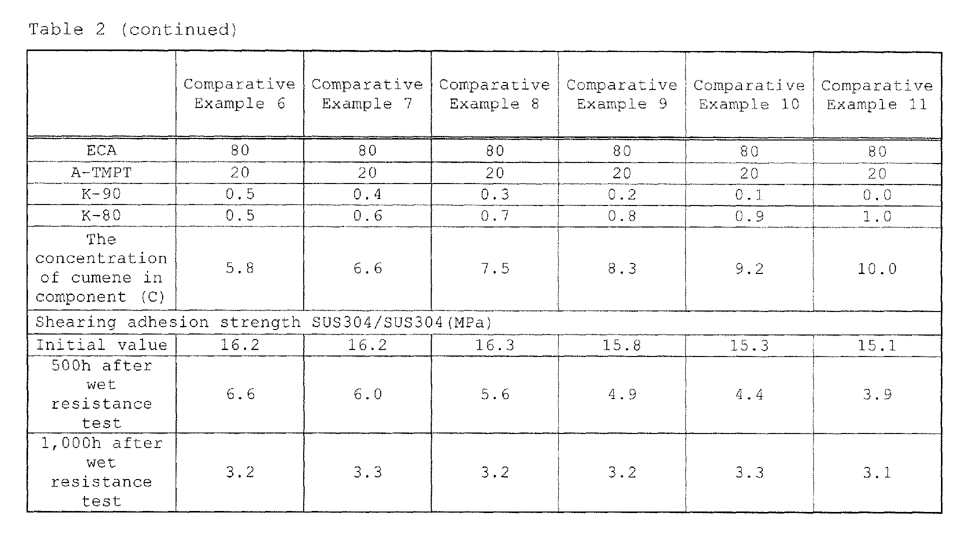

The content of the cumene (1-methylethylbenzene) in component (C) was less than 5 wt% in Examples 8 to 12, and was 5 wt% or more in Comparative Examples 6 to 11. As shown in Comparative Examples 6 to 11, when cumene hydroperoxide in which the content of the cumene (1-methyl-1-ethylbenzene) was 5 wt% or more was used, wet heat resistance was reduced as time elapsed, in particular reduced greatly after 1,000 hours.

While the invention has been described in detail and with reference to specific embodiments thereof, it will be apparent to those skilled in the art that various changes and modifications may be made therein without departing from the spirit and scope of the invention.
The present invention is based on Japanese Patent Application No. 2008-204737 filed on August 7, 2008, and the contents thereof are incorporated herein by reference.

### [Industrial Applicability]

The cyanoacrylate-based adhesive composition according to the invention shows excellent wet heat resistance and has moderate flexibility, and further, has sufficient resistance also to an acidic atmosphere, a basic atmosphere, boiling water, gasoline and the like. This widens the application range to water-related applications, applications under circumstances of high humidity or the use under special circumstances which has been difficult to be realized by conventional instant adhesives, thereby industrially making a substantial contribution to process reduction, cost cutting and the like.

## Claims

1. A cyanoacrylate-based adhesive composition comprising (A) an α-cyanoacrylate, (B) a (meth)acryloyl group-containing multifunctional compound and (C) cumene hydroperoxide in which a content of cumene (1-methyl-1-ethylbenzene) is less than 5 wt%.

2. The cyanoacrylate-based adhesive composition according to claim 1, wherein the component (B) is (B1) trimethylolpropane tri(meth)acrylate.

3. The cyanoacrylate-based adhesive composition according to claim 1 or 2, wherein the component (B) is contained in an amount of 1 to 50% by weight based on the total amount of the component (A) and the component (B), and the component (C) is contained in an amount of 0.01 to 10 parts by weight per 100 parts by weight of the total amount of the component (A) and the component (B).

4. The cyanoacrylate-based adhesive composition according to any one of claims 1 to 3, wherein the component (A) is ethyl α-cyanoacrylate.
